# EUROPÄISCHE PATENTSCHRIFT

(11) **EP 4 518 684 B1**
(45) Veröffentlichungstag und Bekanntmachung des Hinweises auf die Patenterteilung: **28.10.2026**
(21) Anmeldenummer: 23725210.1
(22) Anmeldetag: 05.05.2023
(51) Int. Cl.: A23L 2/84

(54) **SAFTKONZENTRAT MIT VERRINGERTEM ZUCKERGEHALT UND HERSTELLUNGSVERFAHREN**
JUICE CONCENTRATE WITH REDUCED SUGAR CONTENT AND METHOD OF PREPARATION
CONCENTRÉ DE JUS À TENEUR RÉDUITE EN SUCRE ET PROCÉDÉ DE FABRICATION

(30) Priorität: 05.05.2022 EP 22171809
(43) Veröffentlichungstag der Anmeldung: 12.03.2025
(60) Teilanmeldung: 26203731.0
(73) Patentinhaber: Austria Juice GmbH, 3365 Allhartsberg (AT)
(72) Erfinder: HOLDENRIED, Thomas, 3300 Amstetten (AT); ZACHE, Ulrich, 55424 Münster-Sarmsheim (DE); HAPPE, Andreas, 55425 Waldalgesheim (DE); URBAN-KLIK, Manfred, 3500 Krems (AT)
(74) Vertreter: SONN Patentanwälte GmbH & Co KG
(86) Internationale Anmeldenummer: PCT/EP2023/061972
(87) Internationale Veröffentlichungsnummer: WO 2023/214030

(56) Entgegenhaltungen:
- EP-B1- 0 240 067
- EP-B1- 0 613 622
- CH-A5- 632 137
- US-A- 4 971 813
- US-A1- 2015 320 099
- SCHWABL THERESA ET AL: "Entwicklung und sensorische Charakterisierung eines kalorienreduzierten Getränkes auf Apfelbasis", no. 70, 1 January 2020 (2020-01-01), pages 102 - 114, XP055964946, Retrieved from the Internet <URL:https://www.weinobst.at/dam/jcr:bb0d8ae9-c221-4f0e-910c-d9be1b607a51/102-2020.pdf> [retrieved on 20220926]

## Beschreibung

Das Gebiet der Erfindung betrifft Verfahren zur Herstellung von Saftkonzentraten und Säften mit verringertem Zuckergehalt sowie die daraus erhaltenen Saftkonzentrate und Säfte.

Fruchtsäfte, Fruchtweine und Fruchtbrände, sowie Getränke aus diesen Lebensmitteln werden bereits seit sehr langer Zeit, teilweise seit Jahrhunderten und Jahrtausenden hergestellt. Fruchtsäfte und deren Herstellungsverfahren sind nicht nur in der EU durch Direktiven und Expertengutachten (Code of Practice der AIJN, der European Fruit Juice Association), sondern auch im internationalen Codex Alimentarius der WHO spezifiziert. Durch die natürliche Komposition der Inhaltstoffe der Früchte bzw. des aus ihnen gewonnen Saftes, die etablierten Verfahren und den erwünschten Mindesttrockensubstanzgehalt der Fruchtsäfte ergibt sich ein Zuckergehalt der Fruchtsäfte von in der Regel 5 Gew% bis 20 Gew%, je nach Fruchtart.

Das Patent EP 0 240 067 B1 betrifft ein Verfahren zur Abtrennung und Rückgewinnung von flüchtigen Aroma- und Geschmacksstoffen. Das Patent EP 0 613 622 B1 bezieht sich auf ein nichtalkoholisches Getränk mit vermindertem Gehalt an sensorische Fehltöne verursachenden Verbindungen und hierdurch verbesserter Lagerstabilität.

Aufgrund des steigenden Gesundheitsbewusstseins der Konsumenten erfreuen sich auch Gemüsesäfte wachsender Beliebtheit. Eben dieses steigende Gesundheitsbewusstsein führt auch dazu, dass Getränke mit reduziertem Zuckergehalt im allgemeinen Trend liegen.

Im Stand der Technik sind Verfahren zur Verringerung des Zuckergehaltes bekannt:
Die US 2015/32099 A1 betrifft Zusammensetzungen und Verfahren zur Reduktion von Kohlenhydraten und zur Erhöhung des Erythritgehalts in Getränken.

Die EP 2 404 508 A1 offenbart ein Verfahren zur Verringerung des Zuckergehalts von Fruchtsäften, wobei der bei der Vergärung entstandene Alkohol durch Umkehrosmose entfernt wird. Die WO 2019/106564 A1 beschreibt ein Verfahren zur Verringerung des Zuckergehalts auf Basis von Adsorption (z.B. an Zeolith). Auch die US 5 403 604 beschäftigt sich mit derartigen Verfahren.

Die Dokumente EP 0 382 010 A1 bzw. EP 055 488 A1 beziehen sich auf Verfahren zur Verringerung des Zuckergehalts in Fruchtsäften auf der Basis von nichtfermentierenden Mikroorganismen, die keinen Alkohol bilden können, wie *Trichosporon brassicae* bzw. auf der Basis von Verfahrensbedingungen, die alkoholische Gärung vermeiden.

Das US-Patent US 4 971 813 A bezieht sich auf ein Verfahren zur Herstellung eines konzentrierten Fruchtsafts mit geringem Kaloriengehalt. Dabei werden flüchtige Aroma- bzw. Geschmacksstoffe unter Vakuum abgetrennt und gesammelt. Die nicht-flüchtige Saftfraktion wird alkoholischer Gärung mit einer Hefe unterzogen, der dadurch gebildete Alkohol wird abdestilliert. Abschließend werden die eingangs gesammelten, flüchtigen Stoffe der Saftfraktion wieder zugesetzt, um einen Getränk mit reduziertem Kaloriengehalt zu erhalten.

Schwabl et al. (Mitteilungen Klosterneuburg 70 (2020): 102-114) beschäftigt sich mit der Entwicklung und sensorischen Charakterisierung eines kalorienreduzierten Getränks auf Apfelsaftbasis. Im Zuge jener Arbeit wurde ein Verfahren zur Herstellung eines kalorienreduzierten Getränkes auf Apfelsaftbasis mittels Fermentation erprobt. Im ersten Schritt wurden die Aromen des Apfelsaftes abgedampft und kühl gelagert. In der Folge wurde das aromafreie Konzentrat vergoren. Anschließend wurden der Alkohol und die Gäraromen entfernt. Die aroma-, alkohol- und zuckerfreie Fraktion wurde mit dem ursprünglichen im ersten Behandlungsschritt konservierten Apfelaroma, Wasser und pasteurisiertem Apfelsaft mit naturbelassenem Zuckergehalt zu einem kalorienreduzierten Apfelsaftgetränk gemischt.

Die Patentschrift CH 632 137 A5 betrifft ein Verfahren zur Herstellung eines alkoholfreien Fruchtsaftgetränks mit vermindertem Kaloriengehalt sowie das aus diesem Verfahren hergestellte Fruchtsaftgetränk. Zucker wird durch Mikroorganismen oder Enzyme abgebaut, die dabei entstandenen Abbauprodukte (z.B. Alkohol) anschließend entfernt (z.B. durch Destillation).

Die US-Patentanmeldung US 2016/0165944 A1 betrifft ein Verfahren zur Verringerung des Saccharidgehalts in Saftkonzentraten. Auch bei diesem Verfahren wird der Saccharidgehalt durch alkoholische Gärung verringert, allerdings wird der Alkohol nicht abdestilliert, sondern - nachdem der Alkohol in einen Gasstrom aufgenommen wurde - durch Adsorption (z.B. an Zeolith) entfernt. In jenem Dokument wird die Entfernung des Alkohols durch Destillation als nachteilig beschrieben: Der Saccharidgehalt von Säften ist weitaus geringer als der von Saftkonzentraten, so dass dieses Verfahren für Konzentrate als Ausgangsmaterial nicht geeignet sei. Insbesondere bei Saftkonzentraten mit einem Saccharidgehalt von mehr als 20 % (w/v) könne häufig nur ein Teil der Saccharide aufgeschlossen werden, da die Verstoffwechselung der zur Fermentation eingesetzten Mikroorganismen durch eine schnell ansteigende Alkoholkonzentration stark verlangsamt und oft sogar gehemmt werde. Außerdem sei die destillative Abtrennung des entstandenen Alkohols gerade in diesem Fall besonders nachteilig, da die verbleibenden Saccharide schon bei geringer Erwärmung sogenannte Maillard-Reaktionen mit im Konzentrat vorhandenen Aminverbindungen eingingen. Maillard-Reaktionen könnten zu zahlreichen unerwünschten Verbindungen im Produkt führen. Außerdem komme es zu einer unschönen Dunkelfärbung des Konzentrats. Diese Verbindungen beeinträchtigten auch die sensorischen Eigenschaften des Konzentrats und des daraus hergestellten Saftes.

Es ist eine Aufgabe der vorliegenden Erfindung, ein verbessertes Verfahren zur Herstellung eines Saftkonzentrats mit durch Fermentation verringertem Zuckergehalt zur Verfügung zu stellen. Dabei sollen Nachteile von Verfahren aus dem Stand der Technik überwunden werden. Insbesondere soll dadurch die Herstellung von zuckerreduzierten Saftkonzentraten bzw. von aus den Saftkonzentraten erhaltenen, zuckerreduzierten Säften ermöglicht werden, deren sensorische Eigenschaften möglichst optimal sind bzw. möglichst nahe an originalen, nicht zuckerreduzierten Säften sind. Zusätzlich oder alternativ dazu sollen die erfindungsgemäßen Verfahren bzw. Produkte großtechnisch so reibungslos bzw. mit so niedrigem Aufwand wie möglich anwendbar bzw. verwendbar sein und/oder kompatibel zu etablierten Prozessen in der Frucht- bzw. Gemüsesaftherstellung sein.

Daher betrifft die vorliegende Erfindung ein Verfahren zur Herstellung eines Saftkonzentrats mit verringertem Zuckergehalt, umfassend zumindest die folgenden Schritte:
a) Bereitstellen von Saft mit einem Brixwert A und einem Zuckergehalt Z, wobei der Saft vorzugsweise ein Fruchtsaft oder ein Gemüsesaft ist,
b) Entaromatisieren des Safts, um eine Aromakomponente und einen entaromatisierten Saft zu erhalten,
c) Aufkonzentrieren des entaromatisierten Safts, um ein erstes Saftkonzentrat mit einem Brixwert von zumindest 40° zu erhalten, wobei das Saftkonzentrat vorzugsweise ein Fruchtsaftkonzentrat oder ein Gemüsesaftkonzentrat ist,
d) Rückverdünnen des ersten Saftkonzentrats auf einen Brixwert B, wobei der Brixwert B höher ist als der Brixwert A und wobei der Brixwert B zwischen 15° und 35°, bevorzugt zwischen 20° und 30°, liegt, wodurch ein zweites Saftkonzentrat mit dem Brixwert B erhalten wird, wobei das Saftkonzentrat vorzugsweise ein Fruchtsaftkonzentrat oder ein Gemüsesaftkonzentrat ist,
e) Zugabe von Mikroorganismen, die zur alkoholischen Gärung fähig sind,
f) Fermentieren des zweiten Saftkonzentrats unter Gärbedingungen, welche die alkoholische Gärung erlauben, wodurch ein fermentiertes Erzeugnis mit einem Ethanolgehalt von zumindest 6 vol%, bevorzugt zumindest 8 vol%, insbesondere zumindest 10 vol%, erhalten wird und
g) Abtrennen von Ethanol und weiteren Fermentationsprodukten aus dem fermentierten Erzeugnis in einem Verdampfer, vorzugsweise einem Fallstromverdampfer, Plattenverdampfer, Dünnschichtverdampfer oder Zentrifugalverdampfer, wodurch das Saftkonzentrat mit verringertem Zuckergehalt erhalten wird, wobei das Saftkonzentrat vorzugsweise ein Fruchtsaftkonzentrat oder ein Gemüsesaftkonzentrat ist.

In einem weiteren Aspekt betrifft die vorliegende Erfindung ein Verfahren zur Herstellung eines Safts mit verringertem Zuckergehalt, wobei der Saft vorzugsweise ein Fruchtsaft oder ein Gemüsesaft ist, umfassend zumindest die folgenden Schritte:
- Bereitstellen eines Saftkonzentrats mit verringertem Zuckergehalt, das nach dem hierin offenbarten Verfahren zur Herstellung eines Saftkonzentrats mit verringertem Zuckergehalt erhalten worden ist, und
- Verdünnen (z.B. mit Wasser) und Vermischen mit einem Saft oder einem weiteren Saftkonzentrat, so dass der Saft mit verringertem Zuckergehalt erhalten wird, wobei der verringerte Zuckergehalt unter dem Zuckergehalt Z (wie hierin offenbart) liegt. Vorzugsweise beträgt der verringerte Zuckergehalt im Vergleich zum Zuckergehalt Z 90% oder weniger, 80% oder weniger, 70% oder weniger, 60% oder weniger, 50% oder weniger (liegt also bei 90% von Z oder darunter, 80% von Z oder darunter, 70% von Z oder darunter, usw.).

Vorzugsweise wird bei den erfindungsgemäßen Verfahren zumindest ein Teil der zuvor abgetrennten Aromakomponente (in das Saftkonzentrat oder den Saft) rückgeführt.

In noch einem weiteren Aspekt betrifft die vorliegende Erfindung ein Saftkonzentrat, vorzugsweise Fruchtsaftkonzentrat oder Gemüsesaftkonzentrat, erhältlich gemäß dem hierin offenbarten Verfahren, wobei der Gehalt an Hydroxymethylfurfural (HMF) im Saftkonzentrat höchstens 1000 mg/L beträgt, bzw. einen Saft, vorzugsweise Fruchtsaft oder Gemüsesaft, erhältlich gemäß dem hierin offenbarten Verfahren, wobei der Gehalt an HMF im Saft höchstens 50 mg/L beträgt.

In einem weiteren Aspekt betrifft die vorliegende Erfindung ein Saftkonzentrat mit verringertem Zuckergehalt, wobei der Gehalt an HMF im Saftkonzentrat höchstens 1000 mg/L beträgt, wobei das Saftkonzentrat ausgewählt ist aus:
Apfelsaftkonzentrat mit einem Zuckergehalt von höchstens 17%gew, bevorzugt höchstens 14%gew, insbesondere höchstens 11%gew, einem Kaliumgehalt von mindestens 15.000mg/kg, bevorzugt mindestens 17.000 mg/kg, insbesondere mindestens 23.000 mg/kg, einem Essigsäuregehalt von höchstens 1000 mg/kg oder gar höchstens 900 mg/kg , bevorzugt höchstens 800 mg/kg, insbesondere höchstens 700 mg/kg (üblicherweise aber zumindest 10 mg/kg), und vorzugsweise einem Glyceringehalt von zumindest 40 g/L, bevorzugt zumindest 42 g/L, insbesondere zumindest 45 g/L, (üblicherweise aber höchstens 65 g/L) und einem Orangensaftkonzentrat mit einem Zuckergehalt von höchstens 17%gew, bevorzugt höchstens 14%gew, insbesondere höchstens 11%gew, einem Kaliumgehalt von mindestens 9500mg/kg, bevorzugt mindestens 12.000 mg/kg, insbesondere mindestens 15.000 mg/kg, einem Essigsäuregehalt von höchstens 280 mg/kg, bevorzugt höchstens 240 mg/kg, insbesondere höchstens 200 mg/kg, (üblicherweise aber zumindest 10 mg/kg) und vorzugsweise einem Glyceringehalt von zumindest 18 g/L, bevorzugt zumindest 20 g/L, insbesondere zumindest 22 g/L, (üblicherweise aber höchstens 27 g/L).

In einem letzten Aspekt betrifft die vorliegende Erfindung einen Saft mit verringertem Zuckergehalt, wobei der Gehalt an HMF im Saft höchstens 50 mg/L beträgt, wobei der Saft ausgewählt ist aus:
(sortenreinem) Apfelsaft mit einem Zuckergehalt von höchstens 81 g/L, bevorzugt höchstens 72 g/L, insbesondere höchstens 63 g/L, einem Kaliumgehalt von 900 mg/L - 1500 mg/L, bevorzugt 1000 mg/L - 1400 mg/L, insbesondere 1100 mg/L - 1300 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, (sortenreinem) Orangensaft mit einem Zuckergehalt von höchstens 72 g/L, bevorzugt höchstens 64 g/L, insbesondere höchstens 56 g/L, einem Kaliumgehalt von 1300 mg/L - 2500 mg/L, bevorzugt 1500 mg/L -2300 mg/L, insbesondere 1600 mg/L - 2200 mg/L, einem Essigsäuregehalt von höchstens 400 mg/L, bevorzugt höchstens 300 mg/L, insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Ananassaft mit einem Zuckergehalt von höchstens 90 g/L, bevorzugt höchstens 80 g/L, insbesondere höchstens 70 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, (sortenreinem) Bananensaft mit einem Zuckergehalt von höchstens 145,8 g/L, bevorzugt höchstens 129,6 g/L, insbesondere höchstens 113,4 g/L, einem Kaliumgehalt von 2900 mg/L - 4200 mg/L, bevorzugt 3100 mg/L - 4000 mg/L, insbesondere 3300 mg/L - 3800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Birnensaft mit einem Zuckergehalt von höchstens 78,3 g/L, bevorzugt höchstens 69,6 g/L, insbesondere höchstens 60,9 g/L, einem Kaliumgehalt von 1000 mg/L - 2000 mg/L, bevorzugt 1100 mg/L - 1900 mg/L, insbesondere 1200 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
(sortenreinem) Kiwisaft mit einem Zuckergehalt von höchstens 68,4 g/L, bevorzugt höchstens 60,8 g/L, insbesondere höchstens 53,2 g/L, einem Kaliumgehalt von 2500 mg/L - 4600 mg/L, bevorzugt 2700 mg/L - 4400 mg/L, insbesondere 2900 mg/L - 4200 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, und
(sortenreinem) Weintraubensaft mit einem Zuckergehalt von höchstens 120,6 g/L, bevorzugt höchstens 107,2 g/L, insbesondere höchstens 93,8 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L.

Ein Vorteil des erfindungsgemäßen Verfahrens ist, dass das erste Saftkonzentrat (vgl. Schritt c, oben) durch seine erhöhte Haltbarkeit einen äußerst geeigneten Haltepunkt im Verfahren darstellt, der beispielsweise Transport (z.B. zu einer anderen Anlage) oder die Lagerung ermöglicht. Es hat sich im Zuge der Erfindung jedoch herausgestellt, dass eine Rückverdünnung dieses Konzentrats zu einem Brixwert B zwischen 15° und 35° (bevorzugt zwischen 20° und 30°; vgl. Schritt d) eine effektivere Fermentation ermöglicht (und letztlich zu einem sensorisch besseren Produkt führt). Durch den höheren Alkoholgehalt des in Schritt f) erhaltenen fermentierten Erzeugnisses ergibt sich wiederum ein äußerst geeigneter Haltepunkt im Verfahren, der beispielsweise Transport (z.B. zu einer anderen Anlage) oder die Lagerung ermöglicht.

Mit den hierin offenbarten erfindungsgemäßen Verfahren können erstmals die hierin offenbarten, erfindungsgemäßen Produkte hergestellt werden, die trotz verringertem Zuckergehalt hervorragende sensorische Eigenschaften aufweisen. Auch der durch das erfindungsgemäße Verfahren erzielte Glyceringehalt hat (auch durch den leicht süßlichen Geschmack des Glycerins) einen gewissen förderlichen Einfluss auf das Geschmacksbild vor allem hinsichtlich des Mundgefühls.

Die folgende detaillierte Beschreibung betrifft die Verfahren und Produkte (d.h. Säfte und Saftkonzentrate) gleichermaßen, z.B. bevorzugte Verfahrensmerkmale entsprechen auch Eigenschaften oder Eignungen der Produkte bzw. ihrer entsprechenden Inhaltsstoffe und bevorzugte Produktmerkmale entsprechen auch Mitteln, die im erfindungsgemäßen Verfahren eingesetzt werden. Alle vorzugsweisen Merkmale sind miteinander kombinierbar, es sei denn dies wurde explizit ausgeschlossen. Alle Verfahrensmerkmale, inklusive die der oben genannten, sind miteinander kombinierbar. Alle Produktmerkmale, inklusive die der oben genannten, sind miteinander kombinierbar.

Im Lichte der vorliegenden Offenbarung ist für den Fachmann evident, dass die Reihenfolge der Schritte der erfindungsgemäßen Verfahren (insbesondere der Schritte a) - g) beliebig gewählt werden kann bzw. Schritte gleichzeitig ausgeführt werden können, insoweit dies technisch zweckmäßig ist. Beispielsweise kann die Reihenfolge der Schritte d) und e) vertauscht werden bzw. können diese Schritte auch gleichzeitig durchgeführt werden. Zusätzlich oder alternativ dazu können beispielsweise die Schritte b) und c) gleichzeitig durchgeführt werden, z.B. in einem dafür geeigneten Verdampfer. Bevorzugt ist die Durchführung der Schritte in der alphabetischen Reihenfolge a) - g), allenfalls mit gleichzeitiger Durchführung aufeinander folgender Schritte, insoweit dies technisch sinnvoll ist.

In Schritt a) des erfindungsgemäßen Verfahrens zur Herstellung eines Saftkonzentrats mit verringertem Zuckergehalt wird Saft mit einem Brixwert A und einem Zuckergehalt Z bereitgestellt. Dieser Saft ist vorzugsweise ein Fruchtsaft oder ein Gemüsesaft. Insbesondere ist der Fruchtsaft Apfelsaft oder Orangensaft, bevorzugt mit einem der folgenden Brixwerte A und/oder einem der folgenden Zuckergehalte Z:

| | Brixwert A | Zuckergehalt Z |
|---|---|---|
| Apfelsaft (NFC/Direktsaft) | ≥ 10,0° | ca. 10 Gew% |
| Apfelsaft (aus Apfelsaftkonzentrat) | ≥ 11,2° | ca. 10 Gew% |
| Orangensaft (NFC/Direktsaft) | ≥ 10,0° | ca. 8,0-8,5 Gew% |
| Orangensaft (aus Orangensaftkonzentrat | ≥ 11,2° | ca. 8,0-8,5 Gew% |

In einer bevorzugten Ausführungsform weist der Saft (insbesondere der Fruchtsaft oder Gemüsesaft) einen Brixwert A von mindestens 5°, bevorzugt mindestens 10° auf, oder von 4°-30°, bevorzugt von 10°-25°.

In einer weiteren bevorzugten Ausführungsform ist der Saft ein Fruchtsaft, ausgewählt aus Apfelsaft, Aprikosensaft, Bananensaft, Johannisbeersaft, Weintraubensaft, Grapefruitsaft, Guavensaft, Zitronensaft, Mangosaft, Orangensaft, Passionsfruchtsaft, Kiwisaft, Pfirsichsaft, Birnensaft, Ananassaft, Himbeersaft, Sauerkirschensaft, Erdbeersaft, Tomatensaft, Mandarinensaft und Gemischen davon, insbesondere ausgewählt aus Apfelsaft, Birnensaft und Orangensaft; oder ein Gemüsesaft, ausgewählt aus Karottensaft, Rote-Bete-Saft und Gemischen davon; oder ein Gemisch aus dem vorgenannten Fruchtsaft und aus dem vorgenannten Gemüsesaft.

In den Schritten b) und c) des erfindungsgemäßen Verfahrens zur Herstellung eines Saftkonzentrats mit verringertem Zuckergehalt wird der Saft entaromatisiert und der entaromatisierte Saft aufkonzentriert, um das erste Saftkonzentrat zu erhalten. Diese Schritte können in dafür geeigneten Verdampfern (unter Vakuum) auch gleichzeitig durchgeführt werden. Es hat sich für die weitere Verbesserung der Lagerfähigkeit des ersten Saftkonzentrats als vorteilhaft herausgestellt, dass das erste Saftkonzentrat einen Brixwert von zumindest 40°, bevorzugt zumindest 45°, mehr bevorzugt zumindest 50°, noch mehr bevorzugt zumindest 55° oder gar zumindest 60°, insbesondere zumindest 65° oder gar zumindest 70° aufweist. Üblicherweise wird ein Brixwert von 75° nicht wesentlich überschritten.

Das Abtrennen der Aromakomponente bringt den Vorteil mit sich, dass die empfindlicheren Geschmacks- und Aromastoffe durch die Fermentation bzw. die weiteren Verfahrensschritte nicht beeinträchtigt werden (wodurch es zu Geschmacksverlust oder Geschmacksverfälschungen im Produkt kommen würde). Für den Fachmann ist jedoch evident, dass dieser Entaromatisierungsschritt nicht vollständig (d.h. so dass überhaupt keine Aroma- oder Geschmacksstoffe mehr im entaromatisierten Saft verbleiben) ablaufen kann. Die Aromakomponente kann sich aus mehreren Fraktionen zusammen setzen, die getrennt voneinander (gekühlt) gelagert werden.

In einer bevorzugten Ausführungsform weist das erste Saftkonzentrat für eine bessere Lagerfähigkeit einen Wasseranteil von 25 Gew% bis 40 Gew%, bevorzugt 30 Gew% - 35 Gew%, auf.

Für möglichst optimale Voraussetzungen für die nachfolgende Gärung wird in Schritt d) des erfindungsgemäßen Verfahrens zur Herstellung eines Saftkonzentrats mit verringertem Zuckergehalt das erste Saftkonzentrat auf einen Brixwert B rückverdünnt, wobei der Brixwert B höher ist als der Brixwert A und wobei der Brixwert B zwischen 15° und 35°, bevorzugt zwischen 20° und 30°, liegt, wodurch ein zweites Saftkonzentrat mit dem Brixwert B erhalten wird. Dieses zweite Saftkonzentrat hat sich im Zuge der vorliegenden Erfindung als besonders gut geeignet für den fermentativen Abbau des Zuckers in einem möglichst hohen Ausmaß erwiesen, wobei zugleich in Schritt g) eine schonendere Abtrennung des Ethanols ermöglicht wird, was sich wiederum positiv auf die sensorischen Eigenschaften des Endprodukts auswirkt.

In Schritt e) des erfindungsgemäßen Verfahrens zur Herstellung eines Saftkonzentrats mit verringertem Zuckergehalt werden Mikroorganismen, die zur alkoholischen Gärung fähig sind, zugegeben. In einer bevorzugten Ausführungsform umfassen die Mikroorganismen zumindest Hefe der Gattung *Saccharomyces,* vorzugsweise *Saccharomyces cerevisiae,* insbesondere *Saccharomyces cerevisiae* var. cerevisiae oder *Saccharomyces cerevisiae* var. bayanus. Es ist besonders bevorzugt, (ausschließlich) Reinzuchthefen zuzugeben, um das Risiko möglichst zu minimieren, dass während der Gärung Nebenprodukte entstehen, die einen unerwünschten Beigeschmack ("Off-Flavour") im Endprodukt verursachen.

Zweckmäßigerweise werden auch Nährstoffe für die Mikroorganismen zugegeben, um die Fermentation möglichst reibungslos ablaufen zu lassen. Unter den Begriff "Nährstoffe", wie hierin verwendet, fallen auch Mineralstoffe und Vitamine. Als Nährstoffe besonders bevorzugt sind Phosphatsalz (z.B. Ammoniumphosphat) und/oder Thiamin.

Bei der Zugabe der Nährstoffe ist darauf Bedacht zu nehmen, dass der Geschmack des Endprodukts möglichst nicht verfälscht werden soll, d.h. die zugegebene Menge sollte vorzugsweise so gering wie möglich sein und dennoch eine reibungslose Fermentation (d.h. einen vollständigen Ablauf der Fermentation) ermöglichen. In einer bevorzugten Ausführungsform wird vor dem Fermentieren nur so viel Phosphat(salz) hinzugegeben, dass die Phosphatkonzentration im fermentierten Erzeugnis nach dem Entfernen von zumindest einem Teil der Mikroorganismen nicht über 150%, bevorzugt nicht über 140%, mehr bevorzugt nicht über 130%, noch mehr bevorzugt nicht über 120%, insbesondere nicht über 110% oder nicht über 105% der Phosphatkonzentration im zweiten Saftkonzentrat (erhalten mit Schritt d) liegt.

In Schritt f) des erfindungsgemäßen Verfahrens zur Herstellung eines Saftkonzentrats mit verringertem Zuckergehalt wird das zweiten Saftkonzentrat unter Gärbedingungen, welche die alkoholische Gärung erlauben, fermentiert. Diese Gärbedingungen umfassen vorzugsweise eine Gärtemperatur zwischen 15° und 35°C, bevorzugt 15°C bis 25°C, insbesondere zwischen 20°C bis 25°C. Die Fermentation wird bevorzugt für 5-15 Tage durchgeführt.

Zweckmäßigerweise wird eine Inkubation unter Belüftung (d.h. aerob) vorgeschaltet, um die nachfolgende Fermentation möglichst reibungslos ablaufen zu lassen. Erst danach wird Schritt f) durchgeführt, vorzugsweise durchgehend unter anaeroben Bedingungen.

Durch Schritt f) wird ein fermentiertes Erzeugnis mit einem Ethanolgehalt von zumindest 6 vol%, bevorzugt zumindest 8 vol%, insbesondere zumindest 10 vol% oder gar zumindest 12 vol%, erhalten. Üblicherweise wird ein Ethanolgehalt von 17 vol% nicht wesentlich überschritten.

Zweckmäßigerweise wird nach Schritt f) zumindest ein Teil der Mikroorganismen entfernt, vorzugsweise ist zu diesem Zweck ein Filtrationsschritt nachgeschaltet.

In einer besonders bevorzugten Ausführungsform wird (insbesondere zwischen den Schritten f) und g) ein Stabilisierungsschritt durchgeführt. Dabei werden Stabilisierungsmittel bzw. Schönungsmittel (wie z.B. Bentonit, Aktivkohle, Kieselsol und/oder Proteine, beispielsweise Protein aus Erbsen oder anderen Hülsenfrüchten oder Kartoffeln) zugegeben. Zweckmäßigerweise ist diesem Stabilisierungsschritt ein Filtrationsschritt (zur Entfernung der Stabilisierungsmittel bzw. Schönungsmittel) nachgeschaltet.

In Schritt g) des erfindungsgemäßen Verfahrens zur Herstellung eines Saftkonzentrats mit verringertem Zuckergehalt werden nun Ethanol und weitere Fermentationsprodukte (wie Essigsäure, Diacetyl, Ethylacetat, Acetaldehyd, Frucht-Ester und/oder Fuselöle; insbesondere Essigsäure) aus dem fermentierten Erzeugnis in einem Verdampfer abgetrennt. Dadurch wird das Saftkonzentrat mit verringertem Zuckergehalt erhalten. Bevorzugte Parameter sind beispielsweise 40-115 °C und Unterdruck (0-900 mbar).

Das daraus erhaltene Saftkonzentrat mit verringertem Zuckergehalt weist vorzugsweise einen Brixwert zwischen 10° und 60° auf.

Für den Fachmann ist evident, dass dieser Abtrennungsschritt nicht vollständig (d.h. so dass überhaupt kein Alkohol sowie überhaupt keine Fermentationsprodukte im Saftkonzentrat verbleiben) ablaufen kann. Ein gewisser, geringer Alkoholanteil kann in Frucht- und Gemüsesäften toleriert werden.

Der Abtrennungsschritt (im Verdampfer) sollte möglichst schonend sein, um die sensorischen Eigenschaften des Produkts nicht zu beeinträchtigen bzw. zu verfälschen. Dabei sollte auch die übermäßige Entstehung von HMF u.a. durch Hitzeeinwirkung vermieden werden. Es ist daher bevorzugt, dass der Gehalt an HMF im erhaltenen Saftkonzentrat mit verringertem Zuckergehalt höchstens 50 mg/L, noch mehr bevorzugt höchstens 25 mg/L oder gar höchstens 20 mg/L, insbesondere höchstens 15 mg/L oder gar höchstens 10 mg/L beträgt (in Bezug auf die Verdünnung des Konzentrats auf Einfachstärke - "single-strength"). Ein gewisser Gehalt an HMF lässt sich mitunter nicht vollständig vermeiden, so dass der Gehalt an HMF im Saftkonzentrat mit verringertem Zuckergehalt z.B. zumindest 0.5 mg/L oder 1 mg/L betragen kann (in Bezug auf die Verdünnung des Konzentrats auf Einfachstärke - "single-strength").

Damit einhergehend beträgt der Gehalt an HMF im (letztlich erhaltenen) Saft mit verringerten Zuckergehalt höchstens 50 mg/L, noch mehr bevorzugt höchstens 25 mg/L oder gar höchstens 20 mg/L, insbesondere höchstens 15 mg/L oder gar höchstens 10 mg/L. Ein gewisser Gehalt an HMF lässt sich mitunter nicht vollständig vermeiden, so dass der Gehalt an HMF im Saft mit verringerten Zuckergehalt z.B. zumindest 0.5 mg/L oder 1 mg/L betragen kann.

Gemäß der Erfindung beträgt der Gehalt an Hydroxymethylfurfural im Saftkonzentrat mit verringertem Zuckergehalt höchstens 1000 mg/L, bevorzugt höchstens 750 mg/L, mehr bevorzugt höchstens 500 mg/L, noch mehr bevorzugt höchstens 250 mg/L oder gar höchstens 200 mg/L, insbesondere höchstens 150 mg/L oder gar höchstens 100 mg/L. Ein gewisser Gehalt an HMF lässt sich mitunter nicht vollständig vermeiden, so dass der Gehalt an HMF im Saftkonzentrat mit verringertem Zuckergehalt z.B. zumindest 5 mg/L oder zumindest 10 mg/L betragen kann.

Geeignete Verdampfer sind dem Fachmann im Lichte dieser Beschreibung bekannt. Geeignete Verdampfer sind beispielsweise in Cyklis 2022 (Journal of Food Engineering 317 (2022): 110884.), Adnan & Mushtaq 2018 (in: Fruit Juices. Academic Press, 2018. 217-240.) und US 4 971 813 A offenbart.

Als Verdampfer werden bevorzugt Fallstromverdampfer, Plattenverdampfer, Dünnschichtverdampfer oder Zentrifugalverdampfer eingesetzt.

In einer bevorzugten Ausführungsform ist der Verdampfer mit einer Vakuumpumpe ausgestattet, um zusätzlich Unterdruck zu erzeugen.

In einer weiteren bevorzugten Ausführungsform erfolgt das Abtrennen von Ethanol in Schritt g) in einem mehrstufigen Verdampfer bei stufenweiser Absenkung der Temperatur. Dadurch wird möglichst schonend vorgegangen und die sensorischen Eigenschaften des Endprodukts werden verbessert.

In einer weiteren bevorzugten Ausführungsform wird nach Schritt g) ein (weiterer) Stabilisierungsschritt durchgeführt, um allenfalls noch vorhandene, unerwünschte Gäraromen weiter zu reduzieren. Dabei werden Stabilisierungsmittel bzw. Schönungsmittel (wie z.B. Bentonit, Aktivkohle, Kieselsol und/oder Proteine, beispielsweise Protein aus Erbsen oder anderen Hülsenfrüchten oder Kartoffeln) zugegeben. Zweckmäßigerweise ist diesem Stabilisierungsschritt ein Filtrationsschritt (zur Entfernung der Stabilisierungsmittel bzw. Schönungsmittel) nachgeschaltet.

In einer weiteren bevorzugten Ausführungsform ist das Saftkonzentrat mit verringertem Zuckergehalt ein Fruchtsaftkonzentrat, ausgewählt aus Apfelsaftkonzentrat, Aprikosensaftkonzentrat, Bananensaftkonzentrat, Johannisbeersaftkonzentrat, Weintraubensaftkonzentrat, Grapefruitsaftkonzentrat, Guavensaftkonzentrat, Zitronensaftkonzentrat, Mangosaftkonzentrat, Orangensaftkonzentrat, Passionsfruchtsaftkonzentrat, Pfirsichsaftkonzentrat, Birnensaftkonzentrat, Kiwisaftkonzentrat, Ananassaftkonzentrat, Himbeersaftkonzentrat, Sauerkirschensaftkonzentrat, Erdbeersaftkonzentrat, Tomatensaftkonzentrat, Mandarinensaftkonzentrat und Gemischen davon, insbesondere ausgewählt aus Apfelsaftkonzentrat, Birnensaftkonzentrat und Orangensaftkonzentrat; oder ein Gemüsesaftkonzentrat, ausgewählt aus Karottensaftkonzentrat, Rote-Bete-Saftkonzentrat und Gemischen davon; oder ein Gemisch aus dem vorgenannten Fruchtsaftkonzentrat und aus dem vorgenannten Gemüsesaftkonzentrat.

In einer weiteren, bevorzugten Ausführungsform weist das Verfahren zusätzlich einen Schritt h) auf: h) Verschneiden des Saftkonzentrates mit verringertem Zuckergehalt mit einem weiteren Saftkonzentrat, so dass ein Zuckergehalt von 5% bis 90% des Zuckergehalts Z erzielt wird. Vorzugsweise wird zuvor oder dabei zumindest ein Teil der zuvor abgetrennten Aromakomponente rückgeführt. Das so erhaltene Saftkonzentrat kann in diversen Lebensmitteln und Getränken eingesetzt werden, die einen bestimmten Saftgehalt haben, jedoch mit merkbarer Zuckerreduktion im Vergleich zu Lebensmitteln und Getränken auf der Grundlage von Vollzuckersäften (z.B. für Mischgetränke, Saftgetränke, Fruchtsaftgetränke).

Es hat sich herausgestellt, dass mit dem erfindungsgemäßen Verfahren Säfte hergestellt werden können, welche die sensorischen Eigenschaften vorteilhaft beeinflussende Bernsteinsäure beinhalten. Daher ist in einer bevorzugten Ausführungsform der Gehalt an Bernsteinsäure im Saftkonzentrat mit verringertem Zuckergehalt bzw. im (letztlich erhaltenen) Saft zumindest 20 mg/L, bevorzugt zumindest 40 mg/L, mehr bevorzugt zumindest 60 mg/L, noch mehr bevorzugt zumindest 70 mg/L oder gar zumindest 80 mg/L, insbesondere zumindest 90 mg/L oder gar zumindest 100 mg/L. Vorzugsweise sind aber nicht mehr als z.B. 1000 mg/L oder 500 mg/L Bernsteinsäure im Saft enthalten.

Es hat sich ferner herausgestellt, dass mit dem erfindungsgemäßen Verfahren Säfte hergestellt werden können, welche die sensorischen Eigenschaften vorteilhaft beeinflussendes Propylenglykol beinhalten. In einer bevorzugten Ausführungsform beträgt der Gehalt an Propylenglykol im Saftkonzentrat mit verringertem Zuckergehalt zumindest 30 mg/ L, bevorzugt zumindest 40 mg/L oder gar zumindest 50 mg/L, mehr bevorzugt zumindest 60 mg/L oder gar zumindest 70 mg/L, insbesondere zumindest 100 mg/L oder gar zumindest 200 mg/L. In einer bevorzugten Ausführungsform beträgt der Gehalt an Propylenglykol im Saft mit verringertem Zuckergehalt zumindest 10 mg/L, bevorzugt zumindest 20 mg/ L, mehr bevorzugt zumindest 30 mg/L, noch mehr bevorzugt zumindest 40 mg/L oder gar zumindest 50 mg/L, insbesondere zumindest 60 mg/L oder gar zumindest 70 mg/L.

Der Brixwert (°Brix) bezieht sich auf eine Einheit, die den Gehalt an löslichen Feststoffen in einer Lösung angibt. Ein Grad Brix entspricht 1 Gramm Saccharose in 100 Gramm Saccharose-Wasser-Lösung und stellt somit die Konzentration der löslichen Feststoffe in der Lösung in Gewichtsprozent (% w/w) dar. Eine Lösung hat einen Brixwert von 1°, wenn die Dichte dieser Lösung die gleiche ist wie die einer Lösung von 1 Gramm Saccharose in 100 Gramm Saccharose/Wasser-Lösung (bei 20°C und Normaldruck). Der Brixwert wird üblicherweise mit einem Refraktometer gemessen.

Im Folgenden wird die Erfindung anhand von bevorzugten, nicht einschränkenden Beispielen und Zeichnungen näher erläutert.
**Fig. 1** zeigt eine Ausführungsform des erfindungsgemäßen Verfahrens zur Herstellung eines Saftkonzentrats mit verringertem Zuckergehalt. Abkürzungen: BX - Brix, ABV - Ethanolgehalt (vol%).
**Fig. 2** zeigt eine weitere Ausführungsform dieses Verfahrens. Abkürzungen: BX - Brix, ABV - Ethanolgehalt (vol%); tw - teilweise.
Fig. 3 zeigt die Ergebnisse einer Verkostung von erfindungsgemäßen zuckerreduzierten Orangensäften, die ohne bzw. mit Stabilisierungsschritt (mit Aktivkohle als Schönungsmittel) nach Schritt g) hergestellt worden sind, in Form eines Netzdiagramms.
Fig. 4 zeigt die Ergebnisse einer Verkostung von erfindungsgemäßen Apfelsäften, die ohne bzw. mit Stabilisierungsschritt (mit Aktivkohle als Schönungsmittel) nach Schritt g) hergestellt worden sind, in Form eines Netzdiagramms.

### Beispiel 1

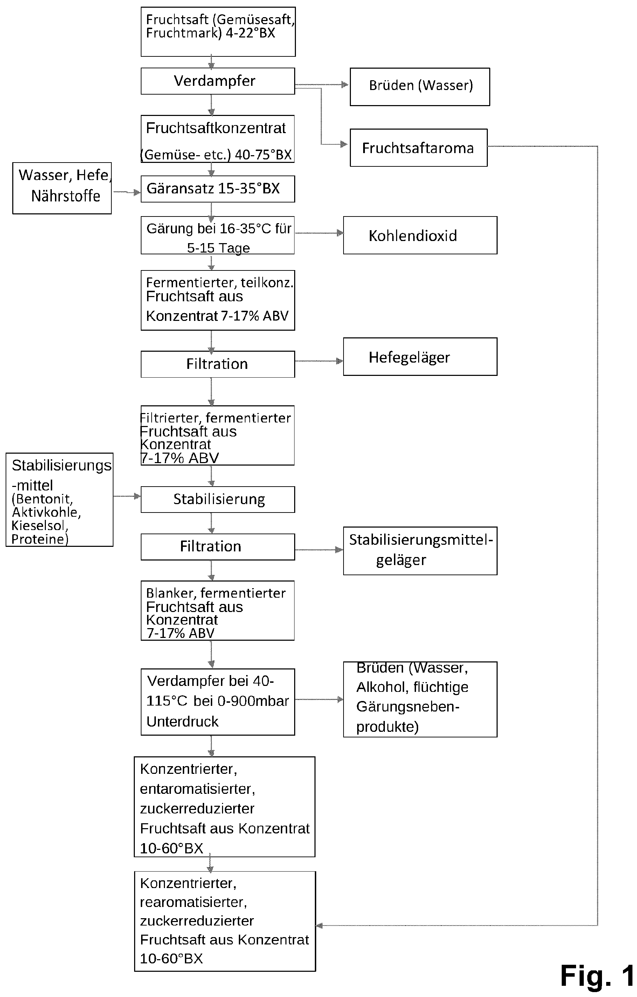

Eine Ausführungsform des erfindungsgemäßen Verfahrens zur Herstellung eines Saftkonzentrats mit verringertem Zuckergehalt wird in Figur 1 gezeigt. Ein Fruchtsaft (z.B. Apfel- oder Orangensaft), oder wahlweise ein Gemüsesaft oder ein Fruchtmark, mit einem Brixwert zwischen 4° bis 22° und einem Zuckergehalt Z wird in einem Verdampfer (beispielsweise in einem Fallstromverdampfer) zu einem Konzentrat (d. h. einem Fruchtsaftkonzentrat oder einem Gemüsesaftkonzentrat) aufkonzentriert. Das dabei abgetrennte Saftaroma (d. h. Fruchtsaftaroma oder Gemüsesaftaroma) wird später im Prozess wieder zugeführt. Danach werden Mikroorganismen (z.B. *Saccharomyces cerevisiae* var. bayanus), Nährstoffe für die Mikroorganismen und Wasser (zur Rückverdünnung) zugeführt, um einen Gäransatz mit einem Brixwert von 15° bis 35° zu erhalten. Die Gärung wird bei 16-35 °C für 5-15 Tage durchgeführt, um einen fermentierten Saft mit 7-17 vol% Ethanol zu gewinnen. Das Filtrat wird mit Stabilisierungsmittel wie Bentonit, Aktivkohle, Kieselsol und/oder Proteinen (z.B. Protein aus Erbsen oder anderen Hülsenfrüchten oder Kartoffeln) stabilisiert und ein weiteres Mal filtriert. Vom daraus wiederum erhaltenen Filtrat (blanker, fermentierter Frucht- oder Gemüsesaft mit 7-17 vol% Ethanol) wird der Alkohol in einem Verdampfer (z.B. einem Fallstromverdampfer, Plattenverdampfer, Dünnschichtverdampfer oder Zentrifugalverdampfer) bei 40-115 °C und Unterdruck abgetrennt. Zuletzt wird die zuvor abgetrennte Aromakomponente zum entalkoholisierten Konzentrat (Brixwert 10° bis 60°) hinzugefügt. Dieses Saftkonzentrat mit verringertem Zuckergehalt wird nun mit nicht-zuckerreduziertem Saftkonzentrat und Wasser auf Trinkstärke im gewünschten Verhältnis rückverschnitten, sodass eine bestimmte Zuckerreduktion von 10% bis 95% im Vergleich zum Zuckergehalt Z erzielt wird.

Alternativ wird das Saftkonzentrat mit verringertem Zuckergehalt mit nicht-zuckerreduziertem Saftkonzentrat im gewünschten Verhältnis verschnitten, um eine bestimmte Zuckerreduktion von 10% bis 95% zu erzielen. Dieses zuckerreduzierte Saftkonzentrat kann in diversen Lebensmitteln und Getränken eingesetzt werden, die einen bestimmten Saftgehalt haben, jedoch mit merkbarer Zuckerreduktion im Vergleich zu Lebensmitteln und Getränken auf der Grundlage von Vollzuckersäften (z.B. für Mischgetränke, Saftgetränke, Fruchtsaftgetränke).

### Beispiel 2

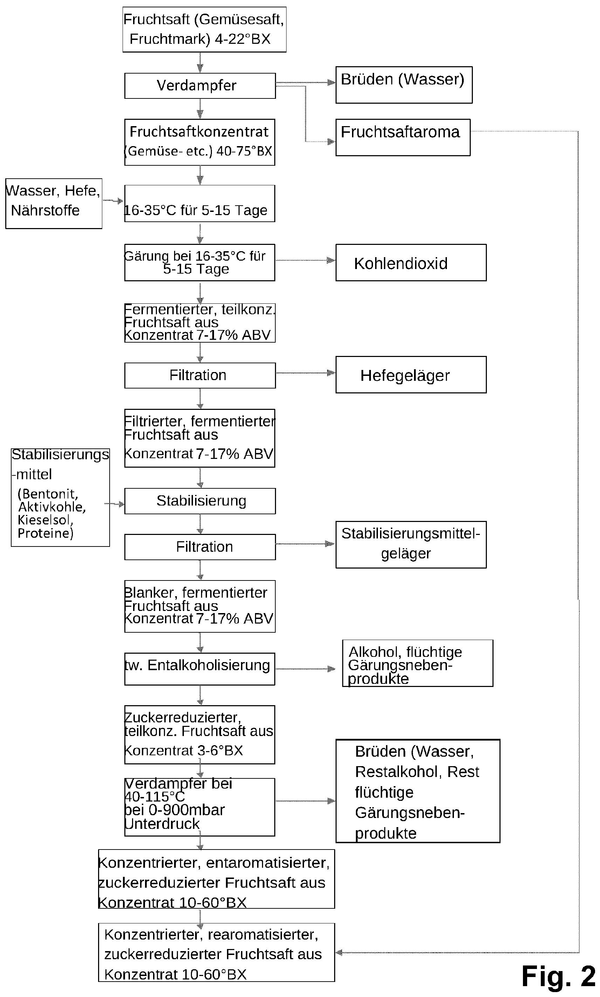

Eine weitere Ausführungsform des erfindungsgemäßen Verfahrens zur Herstellung eines Saftkonzentrats mit verringertem Zuckergehalt wird in Figur 2 gezeigt. Hier wird wie in Beispiel 1 vorgegangen, die Abtrennung des Alkohols (Ethanols) findet jedoch in zwei Schritten statt. Zuerst werden Alkohol und flüchtige Gärungsnebenprodukte (z.B. destillativ) ohne wesentlichen Wasserverlust in einer ersten Anlage abgetrennt ("tw. Entalkoholisierung"), dann wird das daraus erhaltene, teilweise entalkoholisierte Produkt (Brixwert 3°-6°) in eine zweite Anlage (in diesem Fall: Verdampfer) eingebracht, um Restalkohol sowie Wasser abzutrennen und ein Saftkonzentrat mit verringertem Zuckergehalt zu gewinnen.

### Beispiel 3

Es wurde eine empirische Analyse durchgeführt, um die sensorischen Vorteile des erfindungsgemäßen Verfahrens näher zu untersuchen. Des Weiteren wurde der Einfluss der Aktivkohleschönung beim bereits entalkoholisierten Saftkonzentrat mit verringertem Zuckergehalt auf eventuell noch vorhandene Gärungsnebenprodukte untersucht. Zu diesem Zweck wurde eine Vergleichsverkostung mit mehreren Probanden durchgeführt.

### Herstellung der Saftkonzentrate mit verringertem Zuckergehalt:

Mittels des erfindungsgemäßen Verfahrens (Durchführung der Schritte a)-g)) wurde ein Orangensaftkonzentrat mit verringertem Zuckergehalt und ein Apfelsaftkonzentrat mit verringertem Zuckergehalt hergestellt (Zuckerreduktion um 90% gegenüber dem ursprünglichen Zuckergehalt Z).

### Stabilisierung:

Jeweils ein Teil des Saftkonzentrats mit verringertem Zuckergehalt wurde mit Aktivkohle geschönt, während ein anderer Teil zum Vergleich ungeschönt blieb. Details sind in Tabelle 1 angeführt:

**Tabelle 1**

| **Konzentrat** | **Aktivkohle** | **Dosage [g/l]** | **Brix des Konzentrates [°Bx]** | **Dosage bei Single Strength [g/l]** | **Single Strength [°Bx]** |
|---|---|---|---|---|---|
| **Orange** | Carbopal MC-P | 90 | 50 | 6 | 3,5 |
| **Apfel** | Ercarbon SH | 26 | 60 | 1 | 2,3 |

Nach einer Stunde Einwirkzeit wurde die Aktivkohle mittels Kieselgur- und Schichtenfiltration wieder entfernt. Rückverschnitt auf Trinkstärke:
Um um 30% zuckerreduzierte Fruchtsaftgetränke zu erhalten, wurden die Saftkonzentrate mit verringertem Zuckergehalt entsprechend mit herkömmlichem Fruchtsaftkonzentrat vermischt und mit Aromen und Wasser versetzt.

Es wurden 4 verschiedene Trinkproben vorbereitet, zwei Orangengetränke ("geschönt" bzw. "nicht geschönt") und zwei Apfelgetränke ("geschönt" bzw. "nicht geschönt"). Die jeweiligen Rezepturen sind in Tabelle 2 angegeben.

**Tabelle 2**

| **Probe** | **Beschreibung** | **Zutat** | **Zucker [g/l]** | **Brix [°Bx]** |
|---|---|---|---|---|
| **1** | **Orange geschönt** | Orangensaftkonzentrat (süß) | 116,7 | 65 |
| | | Saftkonzentrat mit verringertem | | |
| | | Zuckergehalt (geschönt) | 43,4 | 28 |
| | | Orangen add-back | 0,2 | |
| | | Orangenöl | 0,2 | |
| | | Wasser | | |
| **2** | **Orange nicht geschönt** | Orangensaftkonzentrat (süß) | 116,7 | 65 |
| | | Saftkonzentrat mit verringertem | | |
| | | Zuckergehalt (nicht geschönt) | 43,4 | 28 |
| | | Orangen add-back | 0,2 | |
| | | Orangenöl | 0,2 | |
| | | Wasser | | |
| **3** | **Apfel geschönt** | Apfelsaftkonzentrat 70°Bx | 111,55 | 67,92 |
| | | Saftkonzentrat mit verringertem | | |
| | | Zuckergehalt (geschönt) | 15,52 | 32,21 |
| | | Apfel Aroma (Halbkonzentrat) | 0,65 | |
| | | Wasser | | |
| **4** | **Apfel nicht geschönt** | Apfelsaftkonzentrat 70°Bx | 111,55 | 67,92 |
| | | Saftkonzentrat mit verringertem | | |
| | | Zuckergehalt (nicht geschönt) | 15,52 | 32,21 |
| | | Apfel Aroma (Halbkonzentrat) | 0,65 | |
| | | Wasser | | |

Die hergestellten Proben (Zuckerreduktion: 30 %) für die Verkostung wiesen die in Tabelle 3 angegebenen physikalischen/chemischen Parameter auf.

**Tabelle 3**

| **Probe** | **Beschreibung** | **°Brix** | **Titrierbare Säure (als Zitronensäure) bei pH 8,1 in g/L** | **Kohlenhydrate [g/L]** | **Davon Zucker [g/L]** |
|---|---|---|---|---|---|
| **1** | Orange geschönt | 8,5 | 6,8 | 62 | 61 |
| **2** | Orange nicht geschönt | 8,5 | 6,8 | 62 | 61 |
| **3** | Apfel geschönt | 8,3 | 3,7 | 71 | 65 |
| **4** | Apfel nicht geschönt | 8,3 | 3,7 | 71 | 65 |

Zum Vergleich werden die typischen physikalischen/chemischen Parameter eines 100 % Fruchtsaftes ohne Zuckerreduktion in Tabelle 4 angegeben.

**Tabelle 4**

| **Beschreibung** | **°Brix** | **Titrierbare Säure (als Zitronensäure) bei pH 8,1 in g/L** | **Kohlenhydrate [g/L]** | **Davon Zucker [g/L]** |
|---|---|---|---|---|
| **Orangensaft 100%** | 11,2 | 8,2 | 89 | 89 |
| **Apfelsaft 100%** | 11,2 | 4,8 | 110 | 100 |

### Verkostung:

Die Proben 1-4 wurden von 11 erfahrenen Probanden nach den folgenden Attributen bewertet: Süß, Sauer, Fruchtig, Vollmundig und Gärig, jeweils auf einer Skala von 0 (gar nicht wahrnehmbar) bis 10 (sehr stark wahrnehmbar).

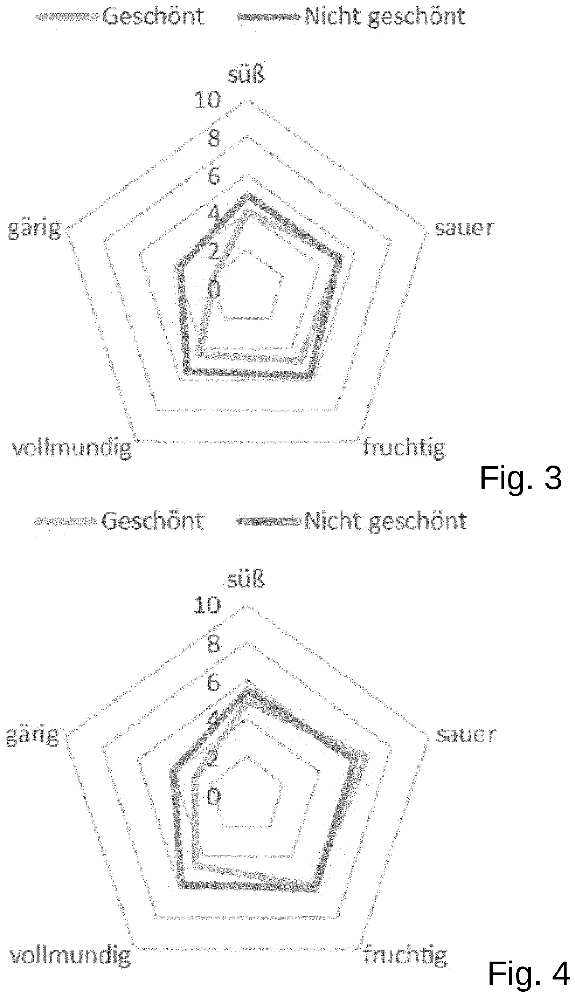

Die jeweiligen Mittelwerte der Attribute werden in den Figuren 3 (Orangengetränke: Proben 1 und 2) und 4 (Apfelgetränke: Proben 3 und 4) in Netzdiagrammen dargestellt.

Insgesamt erfüllten alle vier Proben die sensorischen Anforderungen, wobei die geschönten Proben 1 und 3 jeweils eine geringere Gärnote aufwiesen. Daraus folgt, dass die Schönung einen vorteilhaften Beitrag bei der Reduktion unerwünschter Gärnoten leistet, ohne die anderen Attribute übermäßig zu beeinflussen.

Im Detail wird in Fig. 3 ersichtlich, dass die Gärnote durch die Schönung des Orangensaftkonzentrats mit verringertem Zuckergehalt stark abnahm und beinahe nicht mehr wahrnehmbar ist. Auch Vollmundigkeit, Süße und Fruchtigkeit wurden durch die Aktivkohlebehandlung reduziert, jedoch in eher kleinem Ausmaß, während die Säure konstant blieb.

Im Detail wird in Fig. 4 ersichtlich, dass die Gärnote durch die Schönung um etwa die Hälfte reduziert wurde. Auch die Intensität der Vollmundigkeit nahm etwas ab. Im Vergleich zum zuckerreduzierten Orangengetränk nahm der gärige Geschmack beim Apfelgetränk durch die Aktivkohleschönung zwar etwas weniger ab, jedoch wird auch das Empfinden der Fruchtigkeit, Süße und Säure weniger stark beeinflusst.

## Patentansprüche

1. Verfahren zur Herstellung eines Saftkonzentrats mit verringertem Zuckergehalt, wobei das Saftkonzentrat vorzugsweise ein Fruchtsaftkonzentrat oder ein Gemüsesaftkonzentrat ist, umfassend zumindest die folgenden Schritte:
a) Bereitstellen von Saft mit einem Brixwert A und einem Zuckergehalt Z, wobei der Saft vorzugsweise ein Fruchtsaft oder ein Gemüsesaft ist,
b) Entaromatisieren des Safts, um eine Aromakomponente und einen entaromatisierten Saft zu erhalten,
c) Aufkonzentrieren des entaromatisierten Safts, um ein erstes Saftkonzentrat mit einem Brixwert von zumindest 40° zu erhalten,
d) Rückverdünnen des ersten Saftkonzentrats auf einen Brixwert B, wobei der Brixwert B höher ist als der Brixwert A und wobei der Brixwert B zwischen 15° und 35°, bevorzugt zwischen 20° und 30°, liegt, wodurch ein zweites Saftkonzentrat mit dem Brixwert B erhalten wird,
e) Zugabe von Mikroorganismen, die zur alkoholischen Gärung fähig sind,
f) Fermentieren des zweiten Saftkonzentrats unter Gärbedingungen, welche die alkoholische Gärung erlauben, wodurch ein fermentiertes Erzeugnis mit einem Ethanolgehalt von zumindest 6 vol%, bevorzugt zumindest 8 vol%, insbesondere zumindest 10 vol%, erhalten wird und
g) Abtrennen von Ethanol und weiteren Fermentationsprodukten aus dem fermentierten Erzeugnis in einem Verdampfer, vorzugsweise einem Fallstromverdampfer, Plattenverdampfer, Dünnschichtverdampfer oder Zentrifugalverdampfer, wodurch das Saftkonzentrat mit verringertem Zuckergehalt erhalten wird.

2. Verfahren zur Herstellung eines Safts mit verringertem Zuckergehalt, wobei der Saft vorzugsweise ein Fruchtsaft oder ein Gemüsesaft ist, umfassend zumindest die folgenden Schritte:
- Bereitstellen eines Saftkonzentrats mit verringertem Zuckergehalt, das nach dem Verfahren gemäß Anspruch 1 erhalten worden ist, und
- Verdünnen und Vermischen mit einem Saft oder einem weiteren Saftkonzentrat, so dass der Saft mit verringertem Zuckergehalt erhalten wird, wobei der verringerte Zuckergehalt unter dem Zuckergehalt Z liegt, vorzugsweise wobei der verringerte Zuckergehalt im Vergleich zum Zuckergehalt Z 90% oder weniger, 80% oder weniger, 70% oder weniger, 60% oder weniger, 50% oder weniger beträgt;
vorzugsweise wobei zumindest ein Teil der zuvor abgetrennten Aromakomponente rückgeführt wird.

3. Verfahren nach einem der Ansprüche 1 oder 2, wobei die weiteren Fermentationsprodukte in Schritt g) aus der Gruppe bestehend aus Essigsäure, Diacetyl, Ethylacetat, Acetaldehyd, Frucht-Estern und Fuselölen ausgewählt sind.

4. Verfahren nach einem der Ansprüche 1 bis 3, wobei das Abtrennen von Ethanol in Schritt g) in einem mehrstufigen Verdampfer bei stufenweiser Absenkung der Temperatur erfolgt; und/oder wobei vor und/oder nach Schritt g) Stabilisierungsmittel wie Bentonit, Aktivkohle, Kieselsol und/oder Proteine zugegeben wird, vorzugsweise wobei diese Zugabe nach Schritt f) erfolgt.

5. Verfahren nach einem der Ansprüche 1 bis 4, wobei die Gärbedingungen in Schritt f) eine Gärtemperatur zwischen 15° und 35°C, bevorzugt 15°C bis 25°C, insbesondere zwischen 20°C bis 25°C, umfassen, und/oder wobei nach Schritt f) zumindest ein Teil der Mikroorganismen entfernt wird, vorzugsweise durch Filtration.

6. Verfahren nach einem der Ansprüche 1 bis 5, wobei das Saftkonzentrat mit verringertem Zuckergehalt ein Fruchtsaftkonzentrat ist, ausgewählt aus Apfelsaftkonzentrat, Aprikosensaftkonzentrat, Bananensaftkonzentrat, Johannisbeersaftkonzentrat, Weintraubensaftkonzentrat, Grapefruitsaftkonzentrat, Guavensaftkonzentrat, Zitronensaftkonzentrat, Mangosaftkonzentrat, Orangensaftkonzentrat, Passionsfruchtsaftkonzentrat, Pfirsichsaftkonzentrat, Birnensaftkonzentrat, Kiwisaftkonzentrat, Ananassaftkonzentrat, Himbeersaftkonzentrat, Sauerkirschensaftkonzentrat, Erdbeersaftkonzentrat, Tomatensaftkonzentrat, Mandarinensaftkonzentrat und Gemischen davon, insbesondere ausgewählt aus Apfelsaftkonzentrat, Birnensaftkonzentrat und Orangensaftkonzentrat; oder wobei das Saftkonzentrat mit verringertem Zuckergehalt ein Gemüsesaftkonzentrat ist, ausgewählt aus Karottensaftkonzentrat, Rote-Bete-Saftkonzentrat und Gemischen davon; oder wobei das Saftkonzentrat ein Gemisch aus dem vorgenannten Fruchtsaftkonzentrat und aus dem vorgenannten Gemüsesaftkonzentrat ist.

7. Verfahren nach einem der Ansprüche 1 bis 6, wobei der Saft ein Fruchtsaft ist, ausgewählt aus Apfelsaft, Aprikosensaft, Bananensaft, Johannisbeersaft, Weintraubensaft, Grapefruitsaft, Guavensaft, Zitronensaft, Mangosaft, Orangensaft, Passionsfruchtsaft, Kiwisaft, Pfirsichsaft, Birnensaft, Ananassaft, Himbeersaft, Sauerkirschensaft, Erdbeersaft, Tomatensaft, Mandarinensaft und Gemischen davon, insbesondere ausgewählt aus Apfelsaft, Birnensaft und Orangensaft; oder wobei der Saft ein Gemüsesaft ist, ausgewählt aus Karottensaft, Rote-Bete-Saft und Gemischen davon; oder wobei der Saft ein Gemisch aus dem vorgenannten Fruchtsaft und aus dem vorgenannten Gemüsesaft ist.

8. Saftkonzentrat mit verringertem Zuckergehalt, wobei
(i) das Saftkonzentrat nach dem Verfahren gemäß einem der Ansprüche 1 bis 7 erhältlich ist, wobei der Gehalt an Hydroxymethylfurfural im Saftkonzentrat höchstens 1000 mg/L, bevorzugt höchstens 750 mg/L, mehr bevorzugt höchstens 500 mg/L, noch mehr bevorzugt höchstens 250 mg/L oder gar höchstens 200 mg/L, insbesondere höchstens 150 mg/L oder gar höchstens 100 mg/L beträgt; oder
(ii) der Gehalt an Hydroxymethylfurfural im Saftkonzentrat höchstens 1000 mg/L, bevorzugt höchstens 750 mg/L, mehr bevorzugt höchstens 500 mg/L, noch mehr bevorzugt höchstens 250 mg/L oder gar höchstens 200 mg/L, insbesondere höchstens 150 mg/L oder gar höchstens 100 mg/L beträgt, wobei das Saftkonzentrat ausgewählt ist aus:
Apfelsaftkonzentrat mit einem Zuckergehalt von höchstens 17%gew, bevorzugt höchstens 14%gew, insbesondere höchstens 11%gew, einem Kaliumgehalt von mindestens 15.000mg/kg, bevorzugt mindestens 17.000 mg/kg, insbesondere mindestens 23.000 mg/kg, einem Essigsäuregehalt von höchstens 1000 mg/kg oder gar höchstens 900 mg/kg, bevorzugt höchstens 800 mg/kg,
insbesondere höchstens 700 mg/kg, und vorzugsweise einem Glyceringehalt von zumindest 40 g/L, bevorzugt zumindest 42 g/L, insbesondere zumindest 45 g/L, und einem Orangensaftkonzentrat mit einem Zuckergehalt von höchstens 17%gew, bevorzugt höchstens 14%gew,
insbesondere höchstens 11%gew, einem Kaliumgehalt von mindestens 9500mg/kg, bevorzugt mindestens 12.000 mg/kg, insbesondere mindestens 15.000 mg/kg, einem Essigsäuregehalt von höchstens 280 mg/kg, bevorzugt höchstens 240 mg/kg, insbesondere höchstens 200 mg/kg, und vorzugsweise einem Glyceringehalt von zumindest 18 g/L, bevorzugt zumindest 20 g/L, insbesondere zumindest 22 g/L,
vorzugsweise wobei das Saftkonzentrat erhältlich nach dem Verfahren gemäß einem der Ansprüche 1 bis 7 ist.

9. Saft mit verringertem Zuckergehalt, wobei
(i) der Saft nach dem Verfahren gemäß einem der Ansprüche 2 bis 7 erhältlich ist, wobei der Gehalt an Hydroxymethylfurfural im Saft höchstens 50 mg/L, bevorzugt höchstens 25 mg/L oder gar höchstens 20 mg/L, insbesondere höchstens 15 mg/L oder gar höchstens 10 mg/L beträgt; oder
(ii) der Gehalt an Hydroxymethylfurfural im Saft höchstens 50 mg/L, bevorzugt höchstens 25 mg/L oder gar höchstens 20 mg/L, insbesondere höchstens 15 mg/L oder gar höchstens 10 mg/L beträgt, wobei der Saft ausgewählt ist aus:
Apfelsaft mit einem Zuckergehalt von höchstens 81 g/L, bevorzugt höchstens 72 g/L, insbesondere höchstens 63 g/L, einem Kaliumgehalt von 900 mg/L - 1500 mg/L, bevorzugt 1000 mg/L - 1400 mg/L, insbesondere 1100 mg/L - 1300 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Orangensaft mit einem Zuckergehalt von höchstens 72 g/L, bevorzugt höchstens 64 g/L, insbesondere höchstens 56 g/L, einem Kaliumgehalt von 1300 mg/L - 2500 mg/L, bevorzugt 1500 mg/L -2300 mg/L, insbesondere 1600 mg/L - 2200 mg/L, einem Essigsäuregehalt von höchstens 400 mg/L, bevorzugt höchstens 300 mg/L, insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Ananassaft mit einem Zuckergehalt von höchstens 90 g/L, bevorzugt höchstens 80 g/L, insbesondere höchstens 70 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Bananensaft mit einem Zuckergehalt von höchstens 145,8 g/L, bevorzugt höchstens 129,6 g/L, insbesondere höchstens 113,4 g/L, einem Kaliumgehalt von 2900 mg/L - 4200 mg/L, bevorzugt 3100 mg/L - 4000 mg/L, insbesondere 3300 mg/L - 3800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Birnensaft mit einem Zuckergehalt von höchstens 78,3 g/L, bevorzugt höchstens 69,6 g/L, insbesondere höchstens 60,9 g/L, einem Kaliumgehalt von 1000 mg/L - 2000 mg/L, bevorzugt 1100 mg/L - 1900 mg/L, insbesondere 1200 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
Kiwisaft mit einem Zuckergehalt von höchstens 68,4 g/L, bevorzugt höchstens 60,8 g/L, insbesondere höchstens 53,2 g/L, einem Kaliumgehalt von 2500 mg/L - 4600 mg/L, bevorzugt 2700 mg/L - 4400 mg/L, insbesondere 2900 mg/L - 4200 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L, und
Weintraubensaft mit einem Zuckergehalt von höchstens 120,6 g/L, bevorzugt höchstens 107,2 g/L, insbesondere höchstens 93,8 g/L, einem Kaliumgehalt von 900 mg/L - 2000 mg/L, bevorzugt 1000 mg/L - 1900 mg/L, insbesondere 1100 mg/L - 1800 mg/L, einem Essigsäuregehalt von höchstens 400 mg/L, bevorzugt höchstens 300 mg/L , insbesondere höchstens 200 mg/L, und vorzugsweise einem Glyceringehalt von zumindest 0,5 g/L, bevorzugt zumindest 1,0 g/L, insbesondere zumindest 1,5 g/L oder gar zumindest 2,0 g/L,
vorzugsweise wobei der Saft erhältlich nach dem Verfahren gemäß einem der Ansprüche 2 bis 7 ist.

10. Saftkonzentrat nach Anspruch 8, wobei der Gehalt an Propylenglykol im Saftkonzentrat zumindest 30 mg/L, bevorzugt zumindest 40 mg/L oder gar zumindest 50 mg/L, mehr bevorzugt zumindest 60 mg/L oder gar zumindest 70 mg/L, insbesondere zumindest 100 mg/L oder gar zumindest 200 mg/L beträgt.

11. Saftkonzentrat nach Anspruch 8 oder 10, wobei der Gehalt an Bernsteinsäure im Saftkonzentrat zumindest 20 mg/L, bevorzugt zumindest 40 mg/L, mehr bevorzugt zumindest 60 mg/L, noch mehr bevorzugt zumindest 70 mg/L oder gar zumindest 80 mg/L, insbesondere zumindest 90 mg/L oder gar zumindest 100 mg/L beträgt.

12. Saft nach Anspruch 9, wobei der Gehalt an Propylenglykol im Saft zumindest 10 mg/L, bevorzugt zumindest 20 mg/L, mehr bevorzugt zumindest 30 mg/L, noch mehr bevorzugt zumindest 40 mg/L oder gar zumindest 50 mg/L, insbesondere zumindest 60 mg/L oder gar zumindest 70 mg/L beträgt.

13. Saft nach Anspruch 9 oder 12, wobei der Gehalt an Bernsteinsäure im Saft zumindest 20 mg/L, bevorzugt zumindest 40 mg/L, mehr bevorzugt zumindest 60 mg/L, noch mehr bevorzugt zumindest 70 mg/L oder gar zumindest 80 mg/L, insbesondere zumindest 90 mg/L oder gar zumindest 100 mg/L beträgt.

## Claims

1. A method for producing a juice concentrate having a reduced sugar content, the juice concentrate preferably being a fruit juice concentrate or a vegetable juice concentrate, comprising at least the following steps:
a) Providing juice having a Brix value A and a sugar content Z, wherein the juice is preferably a fruit juice or a vegetable juice;
b) De-aromatising the juice to obtain an aroma component and a de-aromatised juice;
c) Concentrating the de-aromatised juice to obtain a first juice concentrate having a Brix value of at least 40°;
d) Re-diluting the first juice concentrate to a Brix value B, wherein the Brix value B is higher than the Brix value A and wherein the Brix value B is between 15° and 35°, preferably between 20° and 30°, whereby a second juice concentrate with a Brix value B is obtained;
e) Adding microorganisms capable of alcoholic fermentation;
f) Fermenting the second juice concentrate under fermentation conditions that allow alcoholic fermentation, whereby a fermented product having an ethanol content of at least 6% v/v, preferably at least 8% v/v, in particular at least 10% v/v, is obtained; and
g) Separating ethanol and additional fermentation products from the fermented product in an evaporator, preferably a downflow evaporator, plate evaporator, thin-film evaporator or centrifugal evaporator, whereby the juice concentrate having a reduced sugar content is obtained.

2. A method for producing a juice having a reduced sugar content, the juice preferably being a fruit juice or a vegetable juice, comprising at least the following steps:
Providing a juice concentrate having a reduced sugar content obtained by the method according to claim 1; and
Diluting and mixing with a juice or another juice concentrate so that the juice having a reduced sugar content is obtained, wherein the reduced sugar content is below the sugar content Z, preferably wherein the reduced sugar content compared to the sugar content Z is 90% or less, 80% or less, 70% or less, 60% or less, 50% or less;
preferably wherein at least part of the previously separated aroma component is recycled.

3. The method according to any one of claims 1 or 2, wherein the additional fermentation products in step g) are selected from the group consisting of acetic acid, diacetyl, ethyl acetate, acetaldehyde, fruit esters, and fusel oils.

4. The method according to any one of claims 1 to 3, wherein the separation of ethanol in step g) is carried out in a multistage evaporator with a stepwise lowering of the temperature; and/or wherein stabilising agents such as bentonite, activated carbon, colloidal silica and/or proteins are added before and/or after step g), preferably wherein this addition is carried out after step f).

5. The method according to any one of claims 1 to 4, wherein the fermentation conditions in step f) comprise a fermentation temperature between 15°C and 35°C, preferably 15°C to 25°C, in particular between 20°C and 25°C, and/or wherein after step f) at least a part of the microorganisms is removed, preferably by filtration.

6. The method according to any one of claims 1 to 5, wherein the juice concentrate having a reduced sugar content is a fruit juice concentrate selected from apple juice concentrate, apricot juice concentrate, banana juice concentrate, currant juice concentrate, grape juice concentrate, grapefruit juice concentrate, guava juice concentrate, lemon juice concentrate, mango juice concentrate, orange juice concentrate, passion fruit juice concentrate, peach juice concentrate, pear juice concentrate, kiwi juice concentrate, pineapple juice concentrate, raspberry juice concentrate, sour cherry juice concentrate, strawberry juice concentrate, tomato juice concentrate, mandarin juice concentrate, and mixtures thereof, in particular selected from apple juice concentrate, pear juice concentrate, and orange juice concentrate; or wherein the juice concentrate having a reduced sugar content is a vegetable juice concentrate selected from carrot juice concentrate, beetroot juice concentrate, and mixtures thereof; or wherein the juice concentrate is a mixture of said fruit juice concentrate and said vegetable juice concentrate.

7. The method according to any one of claims 1 to 6, wherein the juice is a fruit juice selected from apple juice, apricot juice, banana juice, currant juice, grape juice, grapefruit juice, guava juice, lemon juice, mango juice, orange juice, passion fruit juice, kiwi juice, peach juice, pear juice, pineapple juice, raspberry juice, sour cherry juice, strawberry juice, tomato juice, mandarin juice, and mixtures thereof, in particular selected from apple juice, pear juice, and orange juice; or wherein the juice is a vegetable juice selected from carrot juice, beetroot juice, and mixtures thereof; or wherein the juice is a mixture of said fruit juice and said vegetable juice.

8. A juice concentrate having a reduced sugar content, wherein
(i) the juice concentrate can be obtained by the method according to any one of claims 1 to 7, wherein the content of hydroxymethylfurfural in the juice concentrate is at most 1000 mg/L, preferably at most 750 mg/L, more preferably at most 500 mg/L, even more preferably at most 250 mg/L or even at most 200 mg/L, in particular at most 150 mg/L or even at most 100 mg/L; or
(ii) the content of hydroxymethylfurfural in the juice concentrate is at most 1000 mg/L, preferably at most 750 mg/L, more preferably at most 500 mg/L, even more preferably at most 250 mg/L or even at most 200 mg/L, in particular at most 150 mg/L or even at most 100 mg/L, wherein the juice concentrate is selected from:
apple juice concentrate having a sugar content of at most 17% w/w, preferably at most 14% w/w, in particular at most 11% w/w, a potassium content of at least 15,000 mg/kg, preferably at least 17,000 mg/kg, in particular at least 23,000 mg/kg, an acetic acid content of at most 1000 mg/kg or even at most 900 mg/kg, preferably at most 800 mg/kg, in particular at most 700 mg/kg, and preferably a glycerol content of at least 40 g/L, preferably at least 42 g/L, in particular at least 45 g/L, and
orange juice concentrate having a sugar content of at most 17% w/w, preferably at most 14% w/w, in particular at most 11% w/w, a potassium content of at least 9,500 mg/kg, preferably at least 12,000 mg/kg, in particular at least 15,000 mg/kg, an acetic acid content of at most 280 mg/kg, preferably at most 240 mg/kg, in particular at most 200 mg/kg, and preferably a glycerol content of at least 18 g/L, preferably at least 20 g/L, in particular at least 22 g/L;
preferably wherein the juice concentrate can be obtained by the method according to any one of claims 1 to 7.

9. A juice having a reduced sugar content, wherein
(i) the juice can be obtained by the method according to any one of claims 2 to 7, wherein the content of hydroxymethylfurfural in the juice is at most 50 mg/L, preferably at most 25 mg/L or even at most 20 mg/L, in particular at most 15 mg/L or even at most 10 mg/L; or
(ii) the content of hydroxymethylfurfural in the juice is at most 50 mg/L, preferably at most 25 mg/L or even at most 20 mg/ L, in particular at most 15 mg/L or even at most 10 mg/L, wherein the juice is selected from:
apple juice having a sugar content of at most 81 g/L, preferably at most 72 g/L, in particular at most 63 g/ L, a potassium content of 900 mg/L-1500 mg/L, preferably 1000 mg/L-1400 mg/L, in particular 1100 mg/L-1300 mg/L, an acetic acid content of at most 400 mg/L, preferably at most 300 mg/L, in particular at most 200 mg/L, and preferably a glycerol content of at least 0.5 g/L, preferably at least 1.0 g/L, in particular at least 1.5 g/L or even at least 2.0 g/L,
orange juice having a sugar content of at most 72 g/L, preferably at most 64 g/L, in particular at most 56 g/ L, a potassium content of 1300 mg/L-2500 mg/L, preferably 1500 mg/L-2300 mg/L, in particular 1600 mg/L-2200 mg/L, an acetic acid content of at most 400 mg/L, preferably at most 300 mg/L, in particular at most 200 mg/L, and preferably a glycerol content of at least 0.5 g/L, preferably at least 1.0 g/L, in particular at least 1.5 g/L or even at least 2.0 g/L,
pineapple juice having a sugar content of at most 90 g/L, preferably at most 80 g/L, in particular at most 70 g/L, a potassium content of 900 mg/L-2000 mg/L, preferably 1000 mg/L-1900 mg/L, in particular 1100 mg/ L-1800 mg/L, an acetic acid content of at most 400 mg/ L, preferably at most 300 mg/L, in particular at most 200 mg/L, and preferably a glycerol content of at least 0.5 g/L, preferably at least 1.0 g/L, in particular at least 1.5 g/L or even at least 2.0 g/L,
banana juice having a sugar content of at most 145.8 g/L, preferably at most 129.6 g/L, in particular at most 113.4 g/L, a potassium content of 2900 mg/L-4200 mg/L, preferably 3100 mg/L-4000 mg/L, in particular 3300 mg/L-3800 mg/L, an acetic acid content of at most 400 mg/L, preferably at most 300 mg/L, in particular at most 200 mg/L, and preferably a glycerol content of at least 0.5 g/L, preferably at least 1.0 g/L, in particular at least 1.5 g/L or even at least 2.0 g/L,
pear juice having a sugar content of at most 78.3 g/L, preferably at most 69.6 g/L, in particular at most 60.9 g/L, a potassium content of 1000 mg/L-2000 mg/L, preferably 1100 mg/L-1900 mg/L, in particular 1200 mg/ L-1800 mg/L, an acetic acid content of at most 400 mg/ L, preferably at most 300 mg/L, in particular at most 200 mg/L, and preferably a glycerol content of at least 0.5 g/L, preferably at least 1.0 g/L, in particular at least 1.5 g/L or even at least 2.0 g/L,
kiwi juice having a sugar content of at most 68.4 g/L, preferably at most 60.8 g/L, in particular at most 53.2 g/L, a potassium content of 2500 mg/L-4600 mg/L, preferably 2700 mg/L-4400 mg/L, in particular 2900 mg/ L-4200 mg/L, an acetic acid content of at most 400 mg/ L, preferably at most 300 mg/L, in particular at most 200 mg/L, and preferably a glycerol content of at least 0.5 g/L, preferably at least 1.0 g/L, in particular at least 1.5 g/L or even at least 2.0 g/L, and
grape juice having a sugar content of at most 120.6 g/ L, preferably at most 107.2 g/L, in particular at most 93.8 g/L, a potassium content of 900 mg/L-2000 mg/L, preferably 1000 mg/L-1900 mg/L, in particular 1100 mg/ L-1800 mg/L, an acetic acid content of at most 400 mg/ L, preferably at most 300 mg/L, in particular at most 200 mg/L, and preferably a glycerol content of at least 0.5 g/L, preferably at least 1.0 g/L, in particular at least 1.5 g/L or even at least 2.0 g/L;
preferably wherein the juice can be obtained by the method according to any one of claims 2 to 7.

10. The juice concentrate according to claim 8, wherein the content of propylene glycol in the juice concentrate is at least 30 mg/L, preferably at least 40 mg/L or even at least 50 mg/L, more preferably at least 60 mg/L or even at least 70 mg/L, in particular at least 100 mg/L or even at least 200 mg/L.

11. The juice concentrate according to claim 8 or 10, wherein the content of succinic acid in the juice concentrate is at least 20 mg/L, preferably at least 40 mg/L, more preferably at least 60 mg/L, even more preferably at least 70 mg/L or even at least 80 mg/L, in particular at least 90 mg/L or even at least 100 mg/L.

12. The juice according to claim 9, wherein the content of propylene glycol in the juice is at least 10 mg/L, preferably at least 20 mg/L, more preferably at least 30 mg/L, even more preferably at least 40 mg/L or even at least 50 mg/L, in particular at least 60 mg/L or even at least 70 mg/L.

13. The juice according to claim 9 or 12, wherein the content of succinic acid in the juice is at least 20 mg/L, preferably at least 40 mg/L, more preferably at least 60 mg/L, even more preferably at least 70 mg/L or even at least 80 mg/L, in particular at least 90 mg/L or even at least 100 mg/L.

## Revendications

1. Procédé de fabrication d'un concentré de jus à teneur réduite en sucre, ledit concentré de jus étant de préférence un concentré de jus de fruit ou un concentré de jus de légume, comprenant au moins les étapes suivantes :
a) Fourniture d'un jus ayant une valeur Brix A et une teneur en sucre Z, ledit jus étant de préférence un jus de fruit ou un jus de légume,
b) Désaromatisation du jus afin d'obtenir un composant aromatique et un jus désaromatisé,
c) Concentration du jus désaromatisé afin d'obtenir un premier concentré de jus ayant une valeur Brix d'au moins 40°,
d) Redilution du premier concentré de jus à une valeur Brix B, ladite valeur Brix B étant supérieure à la valeur Brix A et ladite valeur Brix B étant comprise entre 15° et 35°, de préférence entre 20° et 30°, permettant ainsi d'obtenir un deuxième concentré de jus ayant la valeur Brix B,
e) Ajout de micro-organismes capables de réaliser une fermentation alcoolique,
f) Fermentation du deuxième concentré de jus dans des conditions de fermentation permettant la fermentation alcoolique, permettant ainsi d'obtenir un produit fermenté ayant une teneur en éthanol d'au moins 6 % vol., de préférence au moins 8 % vol., en particulier au moins 10 % vol., et
g) Séparation de l'éthanol et des autres produits de fermentation du produit fermenté dans un évaporateur, de préférence un évaporateur à film tombant, un évaporateur à plaques, un évaporateur à film mince ou un évaporateur centrifuge, permettant ainsi d'obtenir le concentré de jus à teneur réduite en sucre.

2. Procédé de fabrication d'un jus à teneur réduite en sucre, ledit jus étant de préférence un jus de fruit ou un jus de légume, comprenant au moins les étapes suivantes :
Fourniture d'un concentré de jus à teneur réduite en sucre, obtenu selon le procédé conforme à la revendication 1, et
Dilution et mélange avec un jus ou un autre concentré de jus, de façon à obtenir le jus à teneur réduite en sucre, ladite teneur réduite en sucre étant inférieure à la teneur en sucre Z, de préférence ladite teneur réduite en sucre représentant, par rapport à la teneur en sucre Z, 90 % ou moins, 80 % ou moins, 70 % ou moins, 60 % ou moins, 50 % ou moins ;
de préférence, au moins une partie du composant aromatique préalablement séparé étant réintroduite.

3. Procédé selon l'une des revendications 1 ou 2, dans lequel les autres produits de fermentation à l'étape g) sont choisis dans le groupe constitué par l'acide acétique, le diacétyle, l'acétate d'éthyle, l'acétaldéhyde, les esters de fruits et les huiles de fusel.

4. Procédé selon l'une des revendications 1 à 3, dans lequel la séparation de l'éthanol à l'étape g) s'effectue dans un évaporateur à plusieurs étages avec abaissement progressif de la température ; et/ou dans lequel des agents stabilisants tels que la bentonite, le charbon actif, le sol de silice et/ou des protéines sont ajoutés avant et/ou après l'étape g), de préférence cet ajout intervenant après l'étape f).

5. Procédé selon l'une des revendications 1 à 4, dans lequel les conditions de fermentation à l'étape f) comprennent une température de fermentation comprise entre 15° et 35°C, de préférence entre 15°C et 25°C, en particulier entre 20°C et 25°C, et/ou dans lequel, après l'étape f), au moins une partie des micro-organismes est éliminée, de préférence par filtration.

6. Procédé selon l'une des revendications 1 à 5, dans lequel le concentré de jus à teneur réduite en sucre est un concentré de jus de fruit choisi parmi le concentré de jus de pomme, le concentré de jus d'abricot, le concentré de jus de banane, le concentré de jus de groseille, le concentré de jus de raisin, le concentré de jus de pamplemousse, le concentré de jus de goyave, le concentré de jus de citron, le concentré de jus de mangue, le concentré de jus d'orange, le concentré de jus de fruit de la passion, le concentré de jus de pêche, le concentré de jus de poire, le concentré de jus de kiwi, le concentré de jus d'ananas, le concentré de jus de framboise, le concentré de jus de griotte, le concentré de jus de fraise, le concentré de jus de tomate, le concentré de jus de mandarine et leurs mélanges, en particulier choisi parmi le concentré de jus de pomme, le concentré de jus de poire et le concentré de jus d'orange ; ou dans lequel le concentré de jus à teneur réduite en sucre est un concentré de jus de légume choisi parmi le concentré de jus de carotte, le concentré de jus de betterave rouge et leurs mélanges ; ou dans lequel le concentré de jus est un mélange dudit concentré de jus de fruit et dudit concentré de jus de légume précités.

7. Procédé selon l'une des revendications 1 à 6, dans lequel le jus est un jus de fruit choisi parmi le jus de pomme, le jus d'abricot, le jus de banane, le jus de groseille, le jus de raisin, le jus de pamplemousse, le jus de goyave, le jus de citron, le jus de mangue, le jus d'orange, le jus de fruit de la passion, le jus de kiwi, le jus de pêche, le jus de poire, le jus d'ananas, le jus de framboise, le jus de griotte, le jus de fraise, le jus de tomate, le jus de mandarine et leurs mélanges, en particulier choisi parmi le jus de pomme, le jus de poire et le jus d'orange ; ou dans lequel le jus est un jus de légume choisi parmi le jus de carotte, le jus de betterave rouge et leurs mélanges ; ou dans lequel le jus est un mélange dudit jus de fruit et dudit jus de légume précités.

8. Concentré de jus à teneur réduite en sucre, dans lequel :
(i) le concentré de jus est obtenu selon le procédé conforme à l'une des revendications 1 à 7, la teneur en hydroxyméthylfurfural dans le concentré de jus étant d'au plus 1 000 mg/L, de préférence d'au plus 750 mg/L, plus préférablement d'au plus 500 mg/L, encore plus préférablement d'au plus 250 mg/L ou même d'au plus 200 mg/L, en particulier d'au plus 150 mg/L ou même d'au plus 100 mg/L ; ou
(ii) la teneur en hydroxyméthylfurfural dans le concentré de jus est d'au plus 1 000 mg/L, de préférence d'au plus 750 mg/L, plus préférablement d'au plus 500 mg/L, encore plus préférablement d'au plus 250 mg/L ou même d'au plus 200 mg/ L, en particulier d'au plus 150 mg/L ou même d'au plus 100 mg/L, ledit concentré de jus étant choisi parmi:
Un concentré de jus de pomme ayant une teneur en sucre d'au plus 17 % en poids, de préférence d'au plus 14 % en poids, en particulier d'au plus 11 % en poids, une teneur en potassium d'au moins 15 000 mg/kg, de préférence d'au moins 17 000 mg/kg, en particulier d'au moins 23 000 mg/kg, une teneur en acide acétique d'au plus 1 000 mg/kg ou même d'au plus 900 mg/kg, de préférence d'au plus 800 mg/kg, en particulier d'au plus 700 mg/kg, et de préférence une teneur en glycérol d'au moins 40 g/L, de préférence d'au moins 42 g/L, en particulier d'au moins 45 g/L, et
Un concentré de jus d'orange ayant une teneur en sucre d'au plus 17 % en poids, de préférence d'au plus 14 % en poids, en particulier d'au plus 11 % en poids, une teneur en potassium d'au moins 9 500 mg/kg, de préférence d'au moins 12 000 mg/kg, en particulier d'au moins 15 000 mg/kg, une teneur en acide acétique d'au plus 280 mg/kg, de préférence d'au plus 240 mg/kg, en particulier d'au plus 200 mg/kg, et de préférence une teneur en glycérol d'au moins 18 g/L, de préférence d'au moins 20 g/L, en particulier d'au moins 22 g/L,
de préférence ledit concentré de jus étant obtenu selon le procédé conforme à l'une des revendications 1 à 7.

9. Jus à teneur réduite en sucre, dans lequel :
(i) le jus est obtenu selon le procédé conforme à l'une des revendications 2 à 7, la teneur en hydroxyméthylfurfural dans le jus étant d'au plus 50 mg/L, de préférence d'au plus 25 mg/L ou même d'au plus 20 mg/L, en particulier d'au plus 15 mg/L ou même d'au plus 10 mg/L ; ou
(ii) la teneur en hydroxyméthylfurfural dans le jus est d'au plus 50 mg/L, de préférence d'au plus 25 mg/L ou même d'au plus 20 mg/L, en particulier d'au plus 15 mg/L ou même d'au plus 10 mg/L, ledit jus étant choisi parmi:
Jus de pomme ayant une teneur en sucre d'au plus 81 g/ L, de préférence d'au plus 72 g/L, en particulier d'au plus 63 g/L, une teneur en potassium de 900 mg/L à 1 500 mg/L, de préférence de 1 000 mg/L à 1 400 mg/L, en particulier de 1 100 mg/L à 1 300 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L,
Jus d'orange ayant une teneur en sucre d'au plus 72 g/ L, de préférence d'au plus 64 g/L, en particulier d'au plus 56 g/L, une teneur en potassium de 1 300 mg/L à 2 500 mg/L, de préférence de 1 500 mg/L à 2 300 mg/L, en particulier de 1 600 mg/L à 2 200 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L,
Jus d'ananas ayant une teneur en sucre d'au plus 90 g/ L, de préférence d'au plus 80 g/L, en particulier d'au plus 70 g/L, une teneur en potassium de 900 mg/L à 2 000 mg/L, de préférence de 1 000 mg/L à 1 900 mg/L, en particulier de 1 100 mg/L à 1 800 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L,
Jus de banane ayant une teneur en sucre d'au plus 145,8 g/L, de préférence d'au plus 129,6 g/L, en particulier d'au plus 113,4 g/L, une teneur en potassium de 2 900 mg/L à 4 200 mg/L, de préférence de 3 100 mg/L à 4 000 mg/L, en particulier de 3 300 mg/L à 3 800 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L,
Jus de poire ayant une teneur en sucre d'au plus 78,3 g/L, de préférence d'au plus 69,6 g/L, en particulier d'au plus 60,9 g/L, une teneur en potassium de 1 000 mg/L à 2 000 mg/L, de préférence de 1 100 mg/L à 1 900 mg/L, en particulier de 1 200 mg/L à 1 800 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L,
Jus de kiwi ayant une teneur en sucre d'au plus 68,4 g/L, de préférence d'au plus 60,8 g/L, en particulier d'au plus 53,2 g/L, une teneur en potassium de 2 500 mg/L à 4 600 mg/L, de préférence de 2 700 mg/L à 4 400 mg/L, en particulier de 2 900 mg/L à 4 200 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L, et
Jus de raisin ayant une teneur en sucre d'au plus 120,6 g/L, de préférence d'au plus 107,2 g/L, en particulier d'au plus 93,8 g/L, une teneur en potassium de 900 mg/L à 2 000 mg/L, de préférence de 1 000 mg/L à 1 900 mg/L, en particulier de 1 100 mg/L à 1 800 mg/L, une teneur en acide acétique d'au plus 400 mg/L, de préférence d'au plus 300 mg/L, en particulier d'au plus 200 mg/L, et de préférence une teneur en glycérol d'au moins 0,5 g/L, de préférence d'au moins 1,0 g/L, en particulier d'au moins 1,5 g/L ou même d'au moins 2,0 g/L,
de préférence ledit jus étant obtenu selon le procédé conforme à l'une des revendications 2 à 7.

10. Concentré de jus selon la revendication 8, dans lequel la teneur en propylène glycol dans le concentré de jus est d'au moins 30 mg/L, de préférence d'au moins 40 mg/L ou même d'au moins 50 mg/L, plus préférablement d'au moins 60 mg/L ou même d'au moins 70 mg/L, en particulier d'au moins 100 mg/L ou même d'au moins 200 mg/L.

11. Concentré de jus selon la revendication 8 ou 10, dans lequel la teneur en acide succinique dans le concentré de jus est d'au moins 20 mg/L, de préférence d'au moins 40 mg/L, plus préférablement d'au moins 60 mg/L, encore plus préférablement d'au moins 70 mg/L ou même d'au moins 80 mg/L, en particulier d'au moins 90 mg/L ou même d'au moins 100 mg/L.

12. Jus selon la revendication 9, dans lequel la teneur en propylène glycol dans le jus est d'au moins 10 mg/L, de préférence d'au moins 20 mg/L, plus préférablement d'au moins 30 mg/L, encore plus préférablement d'au moins 40 mg/L ou même d'au moins 50 mg/L, en particulier d'au moins 60 mg/L ou même d'au moins 70 mg/L.

13. Jus selon la revendication 9 ou 12, dans lequel la teneur en acide succinique dans le jus est d'au moins 20 mg/L, de préférence d'au moins 40 mg/L, plus préférablement d'au moins 60 mg/L, encore plus préférablement d'au moins 70 mg/L ou même d'au moins 80 mg/L, en particulier d'au moins 90 mg/L ou même d'au moins 100 mg/L.
